# EUROPEAN PATENT APPLICATION

(11) **EP 4 651 278 A1**
(43) Date of publication of application: **19.11.2025**
(21) Application number: 24849424.7
(22) Date of filing: 16.07.2024
(51) Int. Cl.: H01M 50/183, H01M 50/105, B29C 65/02, B29C 65/00

(54) **SEALING BLOCK FOR PREVENTING CRACKING OF POUCH-TYPE BATTERY CASE, METHOD FOR SEALING POUCH-TYPE BATTERY CASE BY USING SAME, AND POUCH-TYPE SECONDARY BATTERY MANUFACTURED BY USING SAME**

(30) Priority: 03.08.2023 KR 20230101445
(71) Applicant: LG Energy Solution, Ltd., Seoul 07335 (KR)
(72) Inventor: PARK, Sung Chul, Daejeon 34122 (KR); KANG, Tae Won, Daejeon 34122 (KR)
(74) Representative: Goddar, Heinz J.
(86) International application number: PCT/KR2024/010190
(87) International publication number: WO 2025/028854

(57) **Abstract**

Disclosed are a sealing block for preventing cracks in a pouch-shaped battery case, a method of sealing a pouch-shaped battery case using the same, and a pouch-shaped secondary battery manufactured using the same. The sealing block has an inclined shape so as to minimize impact on an electrode assembly, specifically a separator, while performing R sealing.

## Description

### [Technical Field]

The present invention relates to a sealing block for preventing cracks in a pouch-shaped battery case, a method of sealing a pouch-shaped battery case using the same, and a pouch-shaped secondary battery manufactured using the same.

### [Background Art]

Lithium secondary batteries are classified into a cylindrical battery, a prismatic battery, and a pouch-shaped battery according to the shape of a case. Each of the cylindrical battery and the prismatic battery is a battery having a structure in which an electrode assembly is mounted in a metal can, and the pouch-shaped battery is a battery having a structure in which an electrode assembly is mounted in a pouch-shaped battery case, typically made of aluminum laminated sheet. The pouch-shaped battery has the advantages of being stacked with high integration, high energy density per weight, low cost, and being easy to deform.

The pouch-shaped battery case may be classified as a separable battery case in which an upper case and a lower case are separated from each other and an integrated battery case in which an upper case and a lower case are connected to each other. Regardless of whether the upper case and the lower case are separated from each other, the pouch-shaped battery may also be classified as a one-cavity battery cell having one electrode assembly receiving portion or a two-cavity battery cell having two electrode assembly receiving portions formed respectively in the upper case and the lower case.

The pouch-shaped battery cell is typically sealed by thermal fusion. In the case of the separable battery case, uniform thermal fusion is performed around the outer periphery of the electrode assembly receiving portion, whereby a problem such as sealed portion pushing phenomenon does not occur.

In the case of the integrated battery case, when sealing a sealed portion adjacent to a bent portion, a sealed portion layer of the laminate sheet is pressed and pushed in a direction toward the bent portion. The part of the sealed portion layer that extends in a direction toward the outside of the bent portion is called a bat ear because it resembles the ear of a bat.

The bat ear causes deformation of the battery case, and when the relevant area or the periphery thereof is bent, stress is concentrated, whereby the battery case is damaged. When assembling a battery module or a battery pack, a terrace area including an electrode lead is bent to a certain extent, and damage occurs at the bat ear at the periphery of the relevant area.

Patent Document 1 discloses a two-step sealing method of primarily sealing only the area adjacent to a bent portion and secondarily sealing the remaining area in the state in which an upper case and a lower case face each other in order to solve the bat ear problem. Since only the area adjacent to the bent portion is sealed, a pushing phenomenon of a sealed portion layer may be reduced.

A pouch-shaped battery cell used as an embodiment of Patent Document 1 is a one-cavity battery cell including an integrated battery case in which an upper case and a lower case are connected to each other, wherein only the lower case is provided with a space configured to receive an electrode assembly. A positive electrode terminal and a negative electrode terminal protrude in the same direction, and the protrusion direction of the positive electrode terminal and the negative electrode terminal is opposite the direction in which the bent portion of the battery case is formed.

Patent Document 2 discloses an "R sealed" portion formed within a predetermined distance from a corner of an electrode assembly receiving portion.

A pouch-shaped battery used as an embodiment of Patent Document 2 includes an integrated battery case in which an upper case and a lower case are connected to each other. A positive electrode terminal and a negative electrode terminal protrude respectively in upward and downward directions, which are opposite each other, and a bent portion of the battery case is provided between surfaces from which the positive electrode terminal and the negative electrode terminal protrude (the left side in the figure).

Referring to FIG. 8 of Patent Document 2, Patent Document 2 also performs two-step sealing. The area where the positive electrode terminal and the negative electrode terminal are provided is primarily sealed, and only the R sealed portion is separately sealed.

The inventors of the present application found that, especially in the case of a one-cavity battery cell, in which stress is concentrated to one side despite applying R sealing as in Patent Document 2, cracks easily occur when the thickness of the electrode assembly exceeds a certain value. For a one-cavity battery cell in which the thickness of an electrode assembly is 8 mm or more, cracks occur when the radius (R) of R sealing exceeds 2 mm. Patent Document 2 does not provide a lower limit, but suggests 5 mm or less as an example, but this will change depending on the shape and thickness of the electrode assembly.

Patent Document 2 is also problematic in the following points. If the radius of R sealing is extremely reduced to, for example, 0 mm, the separator may be damaged, which, however, does not seem to be recognized. The electrode assembly received in the pouch-shaped battery is configured such that electrodes and separators are alternately stacked and the separators are generally larger than the electrodes in order to prevent electrical short circuit between a positive electrode and a negative electrode. In the case of a one-cavity battery cell, a separator of the electrode assembly received in the electrode assembly receiving portion, which is disposed at the outermost exposed part thereof, may be disposed so as to extend to a sealed area beyond the electrode assembly receiving portion. The separator may be melted or damaged during thermal fusion using a sealing block.

If additional R sealing is performed as in Patent Document 2, an area where the sealing block and the separator overlap each other may occur, whereby the separator may be damaged and electrical short circuit may occur. Since it is difficult to precisely specify the boundary of the electrode assembly receiving portion and the position of the electrode assembly disposed in the electrode assembly receiving portion, and since R sealing is performed in mm units, further R sealing such as in Patent Document 2 may lead to a larger accident due to damage to the separator.
("Patent Document 1") Korean Registered Patent Publication No. 2367387
("Patent Document 2") Korean Patent Application Publication No. 2022-0099905

### [Disclosure]

### [Technical Problem]

The present invention has been made in view of the above problems, and it is an object of the present invention to provide a sealing block for preventing cracks in a pouch-shaped battery case capable of minimizing damage to a separator during R sealing, regardless of the radius of R sealing, for preventing cracks due to bending of a pouch-shaped battery cell, a method of sealing a pouch-shaped battery case using the same, and a pouch-shaped secondary battery manufactured using the same.

### [Technical Solution]

In order to accomplish the above object, the present invention provides a sealing block for sealing a pouch-shaped battery case, the sealing block including a body portion of a planar shape configured to heat and press an outer periphery of the pouch-shaped battery case in order to seal the pouch-shaped battery case and an extension portion continuously connected to the body portion, the extension portion being shaped such that a pressing force is gradually reduced in a direction toward a receiving portion configured to receive an electrode assembly.

Specifically, the direction toward the receiving portion may be a direction toward any one vertex of the receiving portion.

The planar shape may be a shape configured to position a sealing surface and an outer surface of the pouch-shaped battery case parallel to each other.

The shape in which the pressing force is gradually reduced in the direction toward the receiving portion configured to receive the electrode assembly may be a shape configured to position the sealing surface and the outer surface of the pouch-shaped battery case further spaced apart from each other in the direction toward the receiving portion configured to receive the electrode assembly.

The spacing of the sealing surface and the outer surface of the pouch-shaped battery case may be spacing only in a horizontal direction of the receiving portion, spacing only in a vertical direction of the receiving portion, or spacing in the horizontal direction and the vertical direction of the receiving portion.

Here, the receiving portion may have a rectangular shape, an electrode lead may be drawn out in the horizontal direction of the receiving portion, and a bent portion may be formed in the vertical direction of the receiving portion. That is, the electrode lead may be drawn upward and/or downward.

The sealing block according to the present invention may be applied to a one-cavity, integrated battery case in which the thickness of an electrode assembly is 8 mm or more. In this case, the electrode assembly receiving portion may have a rectangular shape and may be provided in only one of an upper case and a lower case, an electrode may be drawn out from an upper surface and/or a lower surface of the electrode assembly receiving portion, and a bent portion where the upper case and the lower case are connected to each other may be provided on one side.

The spacing may be gradual spacing or stepwise spacing.

The extension portion may be within a predetermined distance from at least one vertex of the receiving portion configured to receive the electrode assembly. One example of the predetermined distance may be less than 5 mm.

The extension portion may be only at the bent portion of the pouch-shaped battery case.

The extension portion may be within 2 mm in a direction toward the inside of the receiving portion and within 5 mm in a direction toward the outside of the receiving portion from the boundary of the receiving portion configured to receive the electrode assembly.

In addition, the present invention provides a method of sealing a pouch-shaped battery case using the sealing block. The sealing may be performed simultaneously on the body portion and the extension portion.

In addition, the present invention provides a pouch-shaped secondary battery including an electrode assembly having electrodes and separators alternately stacked and a pouch-shaped case having a recessed receiving portion configured to receive the electrode assembly, wherein the pouch-shaped case has a sealed portion located on at least one of outer surfaces of the electrode assembly, and the sealed portion includes an extension sealed portion sealed by pressure gradually decreased in a direction toward the recessed receiving portion configured to receive the electrode assembly.

The pouch-shaped secondary battery according to the present invention may include a one-cavity, integrated battery case in which the thickness of an electrode assembly is 8 mm or more. In this case, the electrode assembly receiving portion may have a rectangular shape and may be provided in only one of an upper case and a lower case, an electrode may be drawn out from an upper surface and/or a lower surface of the electrode assembly receiving portion, and a bent portion where the upper case and the lower case are connected to each other may be provided on one side.

The sealing by the pressure gradually decreased may be sealing by pressure gradually decreased only in a horizontal direction of the receiving portion, only in a vertical direction of the receiving portion, or in the horizontal direction and the vertical direction of the receiving portion. Here, the receiving portion may have a rectangular shape, an electrode lead may be drawn out in the horizontal direction of the receiving portion, and a bent portion may be formed in the vertical direction of the receiving portion. That is, the electrode lead may be drawn upward and/or downward.

The pressure may be gradually reduced or stepwise reduced.

The extension sealed portion may be within a predetermined distance from at least one vertex of the receiving portion configured to receive the electrode assembly. One example of the predetermined distance may be less than 5 mm.

The extension sealed portion may be within 2 mm in a direction toward the inside of the receiving portion and within 5 mm in a direction toward the outside of the receiving portion from the boundary of the receiving portion configured to receive the electrode assembly.

In addition, the present invention may provide any possible combinations of the above solving means.

### [Advantageous Effects]

As is apparent from the above description, the present invention is capable of providing a sealing block for preventing cracks in a pouch-shaped battery case capable of minimizing damage to a separator during R sealing, regardless of the radius of R sealing, for preventing cracks due to bending of a pouch-shaped battery cell, a method of sealing a pouch-shaped battery case using the same, and a pouch-shaped secondary battery manufactured using the same.

According to the present invention, no cracks occur in a bent portion even in more than hundreds of experiments, and a separator of an electrode assembly is not damaged by an extension sealed portion.

According to the present invention, no cracks occur in a bent portion even for a one-cavity battery cell having a thickness of 8 mm or more, and a separator of an electrode assembly is not damaged by an extension sealed portion.

### [Description of Drawings]

FIG. 1 is a schematic view of a pouch-shaped battery cell according to a first embodiment of the present invention.
FIG. 2 is a schematic view of sealing the pouch-shaped battery cell according to the first embodiment of the present invention using a sealing block.
FIG. 3 is a schematic view of a sealing block according to a first embodiment of the present invention.
FIG. 4 is an enlarged view of the sealing block according to the first embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

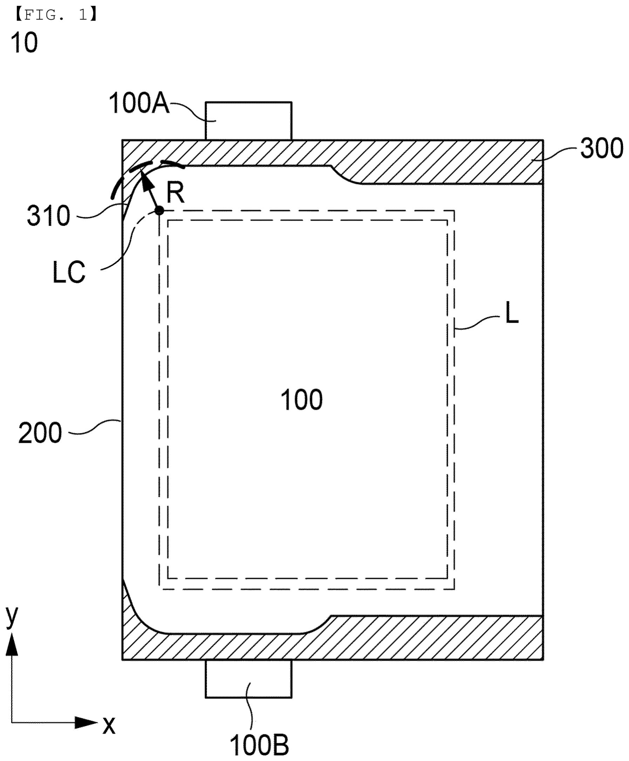

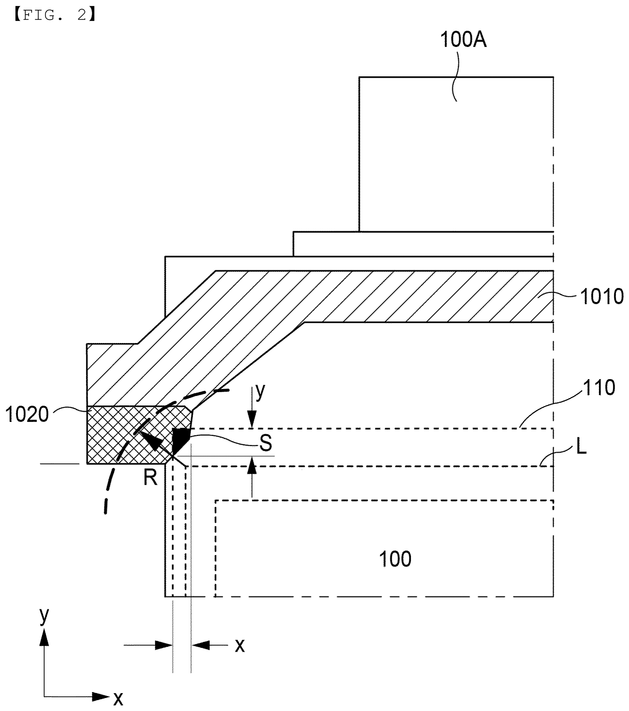

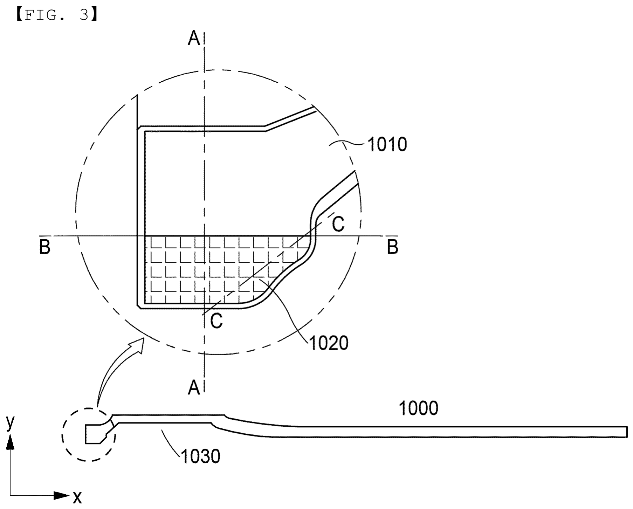

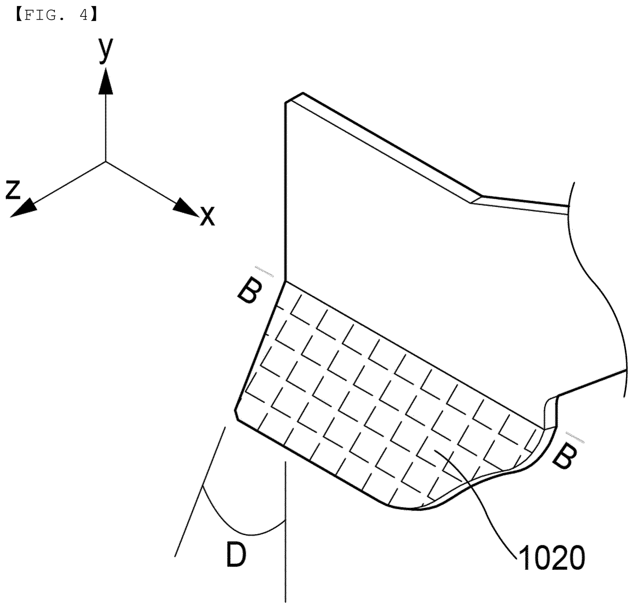

FIG. 1 is a schematic view of a pouch-shaped battery cell according to a first embodiment of the present invention, FIG. 2 is a schematic view of sealing the pouch-shaped battery cell according to the first embodiment of the present invention using a sealing block, FIG. 3 is a schematic view of a sealing block according to a first embodiment of the present invention, and FIG. 4 is an enlarged view of the sealing block according to the first embodiment of the present invention.

Embodiments of the present invention will be described in detail with reference to the drawings.

FIGs. 3 and 4 illustrate a sealing block 1000 according to the present invention. The sealing block 1000 includes a body portion 1010 of a planar shape configured to heat and press an outer periphery of a pouch-shaped battery case in order to seal the pouch-shaped battery case and an extension portion 1020 continuously connected to the body portion 1010, the extension portion 1020 being shaped such that pressing force is gradually reduced in a direction toward a receiving portion in which an electrode assembly 100 is received. The sealing block 1000 according to the present invention has an electrode terrace portion 1030 configured to allow a part having an electrode tab and an electrode lead to be less sealed, but this portion is not essential. The straight body portion 1010 may extend and may be continuously connected to the extension portion 1020, in which case the electrode terrace portion 1030 may be omitted.

The planar shape may be a shape in which a sealing surface and an outer surface of the pouch-shaped battery case are parallel to each other, and the shape in which the pressing force is gradually reduced in the direction toward the receiving portion in which the electrode assembly is received may be a shape in which the sealing surface and the outer surface of the pouch-shaped battery case are further spaced apart from each other in the direction toward the receiving portion in which the electrode assembly is received.

The spacing may be spacing only in a horizontal direction of the receiving portion, spacing only in a vertical direction of the receiving portion, or spacing in the horizontal direction and the vertical direction of the receiving portion. Here, the horizontal direction is an x-direction, and the vertical direction is a y-direction. FIG. 4 shows the extension portion having spacing in the vertical direction, i.e. a -y direction. Bending reference lines AA, BB, and CC indicate spacing in the horizontal direction, spacing in the vertical direction, and spacing in the horizontal direction and the vertical direction, respectively. FIG. 4 shows a progressive spacing shape.

In FIGs. 3 and 4, the plane where the sealing block and the pouch-shaped case are joined to each other corresponds to an xy plane. In FIG. 4, when the extension portion 1020 is spaced apart from the bending reference line BB in the vertical direction, i.e., the -y direction, the angle of inclination thereof, i.e., the angle D formed by the extension portion 1020 and the xy plane when the extension portion 1020 is bent in a z-axis direction, is preferably 0.1 degrees to 5 degrees. If the angle is less than 0.1 degrees, heat of the sealing block may be transferred to a separator, whereby the separator may be damaged. If the angle is greater than 5 degrees, the effect of R sealing according to the present invention is not achieved.

FIGs. 1 and 2 show a pouch-shaped battery sealed by a sealing block 1000 according to the present invention.

The pouch-shaped battery cell of FIG. 1 is configured such that electrode leads 100A and 100B protrude upward and downward, respectively, and a bent portion 200 is provided on the left side of a pouch-shaped battery case. A sealed portion 300 is formed by the body portion 1010, and an extension sealed portion 310 is formed by the extension portion 1020. R sealing is formed within a radius R based on a vertex LC of an electrode assembly receiving portion L configured to receive an electrode assembly at the bent portion. One example of R may be within 5 mm. In FIG. 1, the distance between the bent portion 200 and the electrode assembly receiving portion L is exaggeratedly shown, and is actually no more than 5 mm, which is very short. In FIG. 1, the right side is in an open state because sealing is not performed yet, and the right side is sealed separately in the end, substantially after an electrolyte injection step, an activation step, and the like.

FIG. 2 is an enlarged view of the extension sealed portion of FIG. 1. FIG. 2 shows the sealing block 1000 in place. The electrode assembly 100 received in the electrode assembly receiving portion L is configured such that electrodes and separators are alternately stacked and the separators 110 are generally larger than the electrodes in order to prevent electrical short circuit between a positive electrode and a negative electrode. In the case of a one-cavity battery cell, a separator 110 of the electrode assembly received in the electrode assembly receiving portion L, which is disposed at the outermost exposed part thereof, is disposed so as to extend to the extension portion 1020 of the sealing block 1000 beyond the electrode assembly receiving portion L. At this time, an overlap portion S where the extension portion 1020 and the separator 110 overlap each other occurs, and the separator 110 may be damaged by heat from the extension portion 1020 of the sealing block 1000. In the overlap portion S, more damage to the separator 110 than simple fusion of the separator may occur due to polyballs caused by fusion of the sealed portion layers. In the present invention, the sealing pressure may be reduced by bending the extension portion 1020, whereby damage to the separator may be reduced. Damage to the separator may be prevented by reducing the occurrence of polyballs. The maximum horizontal and vertical lengths of the overlap portion S are denoted by x and y, respectively.

Unlike R sealing, the area where damage due to bending can be reduced may also be set by x and y. It was found that 1.5 mm is required as a minimum of each of x and y for terrace bending where the electrodes protrude.

In the pouch-shaped battery cell, a laminate sheet having an adhesive layer (sealed portion layer) formed therein is used as a battery case, and the outer periphery of the battery case is sealed by thermal fusion. When the laminate sheet is heated and pressed, the adhesive layers are melted, and the sealed portions of the upper case and the lower case are coupled to each other. At this time, a part where resins of the adhesive layers in the coupled portion are agglomerated is formed, which is commonly referred to as polyballs (polymer balls). The heat of the polyballs may damage the separator, but when using the sealing block according to the present invention, damage to the separator is minimized.

A method of sealing the pouch-shaped battery case using the sealing block 1000 according to the present invention is performed at one time using one sealing block. In the present invention, the extension portion is inclined, as shown in FIG. 3, and therefore sealing may be performed at one time without the need for two times of separate sealing, unlike Patent Document 2.

In addition, the present invention provides a pouch-shaped secondary battery including an electrode assembly having electrodes and separators alternately stacked and a pouch-shaped case having a recessed receiving portion configured to receive the electrode assembly, wherein the pouch-shaped case has a sealed portion located on at least one of outer surfaces of the electrode assembly, and the sealed portion includes an extension sealed portion sealed by pressure gradually decreased in a direction toward the receiving portion in which the electrode assembly is received.

Those skilled in the art to which the present invention pertains will appreciate that various applications and modifications are possible within the category of the present invention based on the above description.

### (Description of Reference Symbols)

10: Pouch-shaped battery cell
100: Electrode assembly
110: Separator
100A, 100B: Electrode leads
200: Bent portion of pouch-shaped battery case
300: Sealed portion
310: Extension sealed portion
1000: Sealing block
1010: Body portion
1020: Extension portion
1030: Electrode terrace portion
L: Boundary of electrode assembly receiving portion
LC: Vertex of electrode assembly receiving portion
D: Angle of inclination
S: Separator overlap portion
x: Vertical length of separator overlap portion
y: Horizontal length of separator overlap portion
AA, BB, CC: Bending reference lines of extension sealed portion

## Claims

1. A sealing block for sealing a pouch-shaped battery case, the sealing block comprising:
a body portion of a planar shape, the body portion being configured to heat and press an outer periphery of the pouch-shaped battery case in order to seal the pouch-shaped battery case; and
an extension portion continuously connected to the body portion, the extension portion being shaped such that a pressing force is gradually reduced in a direction toward a receiving portion configured to receive an electrode assembly.

2. The sealing block according to claim 1, wherein
the planar shape is a shape configured to position a sealing surface and an outer surface of the pouch-shaped battery case parallel to each other, and
the shape in which the pressing force is gradually reduced in the direction toward the receiving portion configured to receive the electrode assembly is a shape configured to position the sealing surface and the outer surface of the pouch-shaped battery case further spaced apart from each other in the direction toward the receiving portion configured to receive the electrode assembly.

3. The sealing block according to claim 2, wherein the spacing of the sealing surface and the outer surface of the pouch-shaped battery case is spacing only in a horizontal direction of the receiving portion, spacing only in a vertical direction of the receiving portion, or spacing in the horizontal direction and the vertical direction of the receiving portion.

4. The sealing block according to claim 2, wherein the spacing of the sealing surface and the outer surface of the pouch-shaped battery case is gradual spacing or stepwise spacing.

5. The sealing block according to claim 1, wherein the extension portion is within a predetermined distance from at least one vertex of the receiving portion configured to receive the electrode assembly.

6. The sealing block according to claim 1, wherein the extension portion is only at a bent portion of the pouch-shaped battery case.

7. The sealing block according to claim 1, wherein the extension portion is within 2 mm in a direction toward an inside of the receiving portion and within 5 mm in a direction toward an outside of the receiving portion from a boundary of the receiving portion configured to receive the electrode assembly.

8. A method of sealing a pouch-shaped battery case using the sealing block according to any one of claims 1 to 6.

9. The method according to claim 7, wherein the sealing is performed simultaneously on the body portion and the extension portion.

10. A pouch-shaped secondary battery comprising:
an electrode assembly having electrodes and separators alternately stacked; and
a pouch-shaped case having a recessed receiving portion configured to receive the electrode assembly, wherein
the pouch-shaped case has a sealed portion located on at least one of outer surfaces of the electrode assembly, and
the sealed portion comprises an extension sealed portion sealed by pressure gradually decreased in a direction toward the recessed receiving portion configured to receive the electrode assembly.

11. The pouch-shaped secondary battery according to claim 10, wherein the sealing by the pressure gradually decreased is sealing by pressure gradually decreased only in a horizontal direction of the receiving portion, only in a vertical direction of the receiving portion, or in the horizontal direction and the vertical direction of the receiving portion.

12. The pouch-shaped secondary battery according to claim 10, wherein the pressure is gradually reduced or stepwise reduced.

13. The pouch-shaped secondary battery according to claim 10, wherein the extension sealed portion is within a predetermined distance from at least one vertex of the receiving portion configured to receive the electrode assembly.

14. The pouch-shaped secondary battery according to claim 10, wherein the extension sealed portion is within 2 mm in a direction toward an inside of the receiving portion and within 5 mm in a direction toward an outside of the receiving portion from a boundary of the receiving portion configured to receive the electrode assembly.
